# EUROPÄISCHE PATENTANMELDUNG

(11) **EP 4 574 393 A1**
(43) Veröffentlichungstag der Anmeldung: **25.06.2025**
(21) Anmeldenummer: 24220142.4
(22) Anmeldetag: 16.12.2024
(51) Int. Cl.: B29C 48/92, G01B 11/00

(54) **VERFAHREN ZUR STRUKTURANALYSE EINES MESSOBJEKTES IN EINER EXTRUSIONSSTRECKE, RADAR-MESSVORRICHTUNG UND EXTRUSIONSSTRECKE**

(30) Priorität: 20.12.2023 DE 102023136072
(71) Anmelder: CiTEX Holding GmbH, 49324 Melle (DE)
(72) Erfinder: THIEL, Marius, 49088 Osnabrück (DE)
(74) Vertreter: Bremer, Ulrich

(57) **Zusammenfassung**

Die Erfindung betrifft ein Verfahren zur Strukturanalyse eines Messobjektes (3) in einer Extrusionsstrecke, mit mindestens folgenden Schritten: Bereitstellen einer Radar-Messvorrichtung (6), die einen Radar-Transceiver (7) mit einer optischen Achse (A) und einen auf der optischen Achse (A) angeordneten Reflektor (9) aufweist, wobei zwischen dem Radar-Transceiver (7) und dem Reflektor (9) ein Messraum (11) ausgebildet ist,
Führen eines Messobjektes (3) der Extrusionsstrecke durch den Messraum (11) in einer Transportrichtung (T),
Radarmessung, bei der von dem Radar-Transceiver (7) Radarstrahlen (8) entlang der optischen Achse (A) durch den Messraum (11) und das Messobjekt (3) zu dem Reflektor (9) ausgegeben und reflektierte Reflexionsstrahlen (12) von dem Radar-Transceiver (7) detektiert werden,
Auswertung eines Messsignals (S) des Radar-Transceivers (7) und Ermittlung von Strukturgrößen des Messobjektes (3).

## Beschreibung

Die Erfindung betrifft ein Verfahren zur Strukturanalyse eines Messobjektes in einer Extrusionsstrecke, weiterhin eine Radar-Messvorrichtung, die zumindest teilweise dazu ausgelegt ist, ein derartiges Verfahren durchzuführen, und eine entsprechende Extrusionsstrecke.

In Extrusionsstrecken wird dem Extruder im Allgemeinen ein rieselfähiges Schüttgut aus Partikeln zugeführt, das von dem Extruder aufgenommen und aufgeschmolzen wird, so dass der Extruder nachfolgend ein Extrusionsprodukt ausgibt, das im Allgemeinen von einem Abzug abgezogen wird, um z. B. durch eine Kühlstrecke geführt zu werden. Zur Steuerung oder Regelung der Extrusionsstrecke sind aktuelle Daten sowohl der Materialzuführung als auch einer Bewertung des Extrusionsproduktes erforderlich. Hierzu kann bei der Materialzuführung z. B. eine Extruderschnecke gesteuert werden oder eine gravimetrische Vermessung des aktuell zugeführten Schüttgutes erfolgen.

Zur Vermessung eines Extrusionsproduktes, z. B. eines Stranges bzw. Rohres aus einem Kunststoff-Material, sind u. a. THz- oder Radar-Messeinrichtungen bekannt, die einen Radarstrahl senkrecht auf eine Symmetrieachse des Extrusionsproduktes richten und Teilreflexionen an Grenzflächen des Messobjektes detektieren, um z. B. Schichtdicken zu ermitteln.

Die DE 10 2019 109 340 A1 zeigt ein THz-Messverfahren und eine THz-Messvorrichtung zum Erfassen eines Materiestroms, bei dem ein THz-Sendestrahl durch einen Materiestrom zu einem Reflektor-Spiegel ausgesandt und ein THz-Reflexionsstrahl detektiert wird, wobei vorab eine Kalibriermessung bei leerem Messraum durchgeführt wird, um eine Laufzeitverzögerung durch die jeweils in der optischen Achse vorhandenen Materialteilchen zu ermitteln.

Messungen mit Radarstrahlung bzw. THz-Strahlung eignen sich insbesondere zur Ermittlung von Schichtdicken, da an definierten Grenzflächen teilreflektierte Strahlung als Mess-Peak detektiert werden kann und somit aus Laufzeitdifferenzen auf Schichtdicken geschlossen werden kann. Die Vermessung eines Messobjektes mit kleineren Einschlüssen ist im Allgemeinen jedoch problematischer, da die jeweiligen Einschlüsse die einfallende Radarstrahlung bzw. THz-Strahlung in unterschiedliche Richtungen teilreflektieren, je nach Ausrichtung ihrer Grenzflächen.

Die DE 10 2015 110 600 B3 beschreibt ein Verfahren und eine Vorrichtung zur Ermittlung einer Schichteigenschaft einer Schicht in einem Extrusionsprozess, wobei zusätzlich zu einer elektromagnetischen Messung der durch die Schicht gelangten Strahlung eine Zuführrate oder Zuführmenge des einem Extruder zugeführten Zuführmaterials gemessen wird, und aus diesen Messungen relevante Schichteigenschaften ermittelt werden. Hierbei kann insbesondere ein Schaumrohr vermessen werden, das bei der Extrusion aus einem Kunststoff-Material mit einem Gas ausgebildet wird.

DE 10 2020 116 810 A1 beschreibt ein THz-Messverfahren und eine THz-Messvorrichtung zum Vermessen eines Messobjektes, insbesondere eines Rohres aus einem Kunststoff oder Gummi, wobei zunächst ein Kalibrierungsschritt zum Messen einer Leerlaufzeit mindestens eines THz-Sendestrahls durch eine Leerlaufstrecke zwischen zwei Messpositionen eines Messpositions ohne das Messobjekt durchgeführt wird, und nachfolgend eine erste THz-Messung von einer ersten Messposition der beiden Positionen aus durch das Messobjekt zu der zweiten Messposition durchgeführt wird, und nachfolgend eine zweite THz-Messung entlang einer anderen optischen Achse erfolgt, wobei Außenlaufzeiten bis zu einer Außenfläche des Messobjektes und Wandlaufzeiten durch die Wandbereiche des Messobjektes, sowie eine Gesamtlaufzeit durch den gesamten Messbereich mit dem Messobjekt gemessen werden, um hieraus Wanddicken zu ermitteln.

Die DE 10 2016 103 298 A1 beschreibt eine Terahertz-Messvorrichtung zum Ermitteln mindestens einer Schichtdicke mindestens einer Schicht eines Prüfobjektes mit seiner Laufzeitmessung, mit einer Terahertz-Sende- und Empfangseinheit zum Aussenden und Empfangen von Terahertz-Strahlung und Erzeugen einer Signalamplitude, einen in einer optischen Achse der Terahertz-Sende- und Empfangseinheit vorgesehenen Spiegel zum Reflektieren von durch das Prüfobjekt gelangter THz-Strahlung zurück zu der Sende- und Empfangseinheit, wobei aus der Signalamplitude als Funktion der Zeit oder Frequenz, unter Auswertung eines Totalreflexions-Peaks, eine Schichtdicke ermittelt wird.

Die DE 10 2020 120 547 A1 beschreibt ein THz-Messverfahren zum Vermessen eines Messobjektes, mit einer Kalibriermessung unter Aussenden eines THz-Sendestrahls durch einen leeren Messraum und Reflexion an einem Hauptreflektor zurück zu einem THz-Transceiver, und einer Objektmessung nach Einbringen eines Messobjektes in den Messraum, unter Aussenden des THz-Sendestrahls durch den Messraum und das Messobjekt und Reflexion am Hauptreflektor zurück zu dem THz-Transceiver, wobei aus dem Fehlen eines Teil-Reflexionspreaks eine geometrische Schichtdicke und Ermittlung einer Gesamt-Verzögerungszeit und Vergleich mit der Kalibierzeit ermittelt wird.

Der Erfindung liegt somit die Aufgabe zugrunde, ein Verfahren zur Strukturanalyse in einer Extrusionsstrecke, eine Radar-Messvorrichtung zur zumindest teilweisen Durchführung des Verfahrens und eine entsprechende Extrusionsstrecke zu schaffen, die mit geringem Aufwand eine Verbesserung des Extrusionsprozesses ermöglichen. Insbesondere soll hierbei eine umfangreiche Strukturanalyse eines Messobjektes in der Extrusionsstrecke ermöglicht werden.

Diese Aufgabe wird durch die unabhängigen Ansprüche gelöst. Die Unteransprüche beschreiben bevorzugte Weiterbildungen.

Somit wird ein Messobjekt der Extrusionsstrecke durch eine Radar-Messvorrichtung vermessen, die einen Radar-Transceiver und einen gegenüberliegenden Reflektor aufweist, so dass zwischen diesen Elementen ein Messraum ausgebildet wird, durch den ein Messobjekt geführt werden kann. Hierbei kann insbesondere eine Relativverstellung der Radar- Messvorrichtung und des Messobjektes vorgesehen sein, um zeitlich aufeinanderfolgende Messungen zu ermöglichen.

Als Messobjekt mit Einschlüssen kann zum einen ein dem Extruder zugeführter Materialstrom vermessen werden, bei dem in einem Gas Partikel aufgenommen sind, wobei ein Gasstrom oder z. B. auch ein frei fallendes Schüttgut z. B. in der Materialzuführung zu dem Extruder vermessen werden kann. Eine derartige Vermessung des Materialstroms ist hilfreich, um zum einen die Zuführmenge zu dem Extruder genau zu erfassen und Inhomogenitäten bzw. Schwankungen zu ermitteln; weiterhin kann hierdurch eine Regelung des Zuführstroms bzw. Materialstroms erfolgen.

Weiterhin kann als Messobjekt das vom Extruder ausgegebene Extrusionsprodukt, z. B. ein Strang bzw. Rohr, vermessen werden, wobei insbesondere Einschlüsse in dem Extrusionsprodukt ermittelt und bewertet werden. Derartige Einschlüsse können z. B. Luftblasen sein, die in einem Schaumrohr bewusst ausgebildet werden oder in einem extrudierten Kunststoffrohr ansonsten als ungewollte Lunker vorliegen. Weiterhin können auch Fasern in dem Extrusionsprodukt, bzw. Additive wie zugegebenes Füllmaterial und Pulver, z. B. aus Holz, Kunststoff, Glas usw., als Einschlüsse des Extrusionsproduktes erfasst werden.

Hierbei wird erfindungsgemäß erkannt, dass sowohl in der Materialzufuhr als auch im Extrusionsprodukt jeweils eine äußere Matrix vorliegt, d. h. beim Materialstrom als umliegendes Gas und beim Extrusionsprodukt durch die Kunststoff-Matrix, und in dieser Matrix aufgenommene Einschlüsse, die beim Materialstrom durch die Partikel gebildet sind und beim Extrusionsprodukt durch die jeweiligen Einschlüsse wie Luftblasen oder z. B. Fasern. Somit sind unterschiedliche Messungen an einer Extrusionsstrecke, in unterschiedlichen Bereichen, mit grundsätzlich dem gleichen Messaufbau möglich, was auch zu einer standardisierten Messung und günstigem apparativem Einsatz, z. B. auch mit gemeinsamer Datenverarbeitung führen kann.

Erfindungsgemäß wird weiterhin erkannt, dass eine Bewertung der Einschlüsse vorteilhafterweise durch eine statistische Auswertung eines mittleren Signalbereichs der erfassten Signalamplitude erfolgen kann. Eine typische Signalamplitude einer Radar-Messung umfasst einen sehr starken Totalreflexions-Peak an dem hinteren Reflektor, und einen vor dem Totalreflexions-Peak ausgebildeten mittleren Signalbereich, in dem Teilreflexionen an den Einschlüssen in dem Messobjekt auftreten. Hierbei treten bei einem Messobjekt mit Einschlüssen im Allgemeinen keine oder zu wenige eindeutig definierte Teilreflexions-Peaks auf, da eine Vielzahl von Partikeln nur statistisch geeignete Grenzflächen aufweist, die die einfallenden Radarstrahlen zum Radar-Transceiver zurück reflektieren. Der mittlere Signalbereich kann z.B. durch eine untere und obere Lufzeit festgelegt werden.

Erfindungsgemäß wird vorzugsweise eine statistische Auswertung des mittleren Signalbereichs vorgeschlagen, da die Vielzahl von Teilreflexions-Peaks hierdurch erfasst und beschrieben werden können, und die statistische Auswertung zu einer umfassenden Bewertung des Messobjektes führen kann.

Bei der Erfassung eines Materialstroms der Partikel in der Zuführung zu dem Extruder kann zum einen eine statistische Auswertung jeder Signalamplitude, d. h. einer Messung zu einem Zeitpunkt, erfolgen. Hierbei kann der mittlere Signalbereich nach unterschiedlichen statistischen Kriterien bewertet werden, z. B. der Standardabweichung, Varianz, Streuung, zeitlicher Trend, zeitliche Drift.

Hierdurch kann somit z. B. der Materialstrom bzw. die pro Zeiteinheit zugeführte Materialmenge an Partikeln erfasst oder relativ genau abgeschätzt werden. Insbesondere werden sich statistische Schwankungen bei dieser statistischen Auswertung im Laufe der Zeit weitgehend ausgleichen, so dass eine sehr genaue Erfassung des Materialstroms ermöglicht wird.

Weiterhin ist eine Bewertung des Totalreflexions-Peaks in dem Messsignal bzw. der Signalamplitude relevant. Dem liegt die Überlegung zugrunde, dass nicht nur die Gesamt-Verzögerung des Totalreflexions-Peaks gegenüber einer Leermessung relevant ist, sondern auch die Form des Totalreflexions-Peaks bzw. eines Bereichs des Totalreflexions-Peaks, insbesondere seine hintere Signalflanke oder auch seine vordere Signalflanke. Diese Konturierung kann Aussagen über die Materialverteilung bzw. die Struktur der Einschlüsse ermöglichen. So kann der Flankenverlauf, z. B. eine Halbwertsbreite oder ein unterer, auslaufender Flankenbereich des Totalreflexions-Peaks bewertet werden, der die durchschnittlichen oder statistischen Verzögerungen durch die einzelnen Einschlüsse, d. h. Partikel in dem Materialstrom oder Luftblasen, Fasern und andere Einschlüsse in der Kunststoff-Matrix, beschreibt.

Somit kann auch eine statistische Bewertung der zeitlichen Änderung des mittleren Signalbereichs und/oder des Bereiches des Totalreflexions-Peaks über mehrere aufeinanderfolgende Messungen ausgeführt werden, so dass die statistische Bewertung zum einen eine bessere Mittelung ergibt und zum anderen auch signifikante Merkmale wie z.B. Konturierungen besser erfasst werden können.

Insbesondere der Peakbereich der Totalreflexion hinter dem eigentlichen Messobjekt kann auch durch Definieren der sogenannten Fensterung mittels Ausschnittsbreite von dem Frequenzbereich in den Zeitbereich (FMCW-Radar) oder bei THz-Puls-System vom Zeitbereich in den Frequenzbereich transformiert werden. Diese jeweils andere Form der Darstellung ermöglicht es ebenfalls, eine Information über die spektrale Zusammensetzung zu erhalten. Durch die Einschlüsse bzw. Partikel findet eine Dämpfung / Absorption und Interferenz der Strahlung in speziellen individuellen Bereichen statt, die somit ermittelt werden kann und Rückschlüsse auf die Beschaffenheit des Messobjekt Rückschlüsse ziehen lässt. So kann z.B. ein Absorptionsverhalten oder Interferenzmuster in Abhängigkeit der Größe und/oder Materialzusammensetzung der Partikel herangezogen werden, dass z.B. aus vorherigen Messungen und/oder aus Kalibriermessungen bekannt ist, um die Einschlüsse oder Partikel zu bewerten.

Die Umrechnung kann mittels inverser Fourier-Transformation bzw. als Fast-Fourier-Transformation (FFT) hierbei schnell und mit relativ geringem Rechenaufwand erfolgen, da insbesondere auchFFT-Verfahren als solche bekannt sind. Die Bewertung kann insbesondere auch durch selbstlernende Systeme oder AI-Tools erfolgen, unter Heranziehung von Kalibriermessungen oder Referenzmessungen an Partikeln, oder vorherigen Messungen.

Die Laufzeitmessung erfolgt bei einem FMCW-Radar durch einen Frequenz-Sweep, bei dem die Frequenz in dem Schwingkreis des Radar-Transceivers kontinuierlich moduliert wird, z.B. als Sägezahn-Signal, von einer Start-Frequenz f0 bis zu einer Stop-Frequenz f-stop, und über eine Antenne ausgesandt wird. Der reflektierte Strahl wird von der Antenne aufgenommen und als elektrisches Signal bzw. Schwingung dem Sende-Signal überlagert, wobei das detektierte Signal entsprechend der Laufzeit eine etwas geänderte Frequenz f aufweist. Durch die Überlagerung der beiden Signale bzw. Schwingungen wird eine Zwischenfrequenz IF ausgebildet, die von der Differenz der ausgesandten und empfangenen Frequenz abhängt. Diese Messung im Frequenzraum wird bei dem FMCW-Radar nachfolgend in eine Messung im Zeitbereich Fourier-transformiert, wobei sich in dem so ausgebildeten Zeitbereich dann die Laufzeiten ergeben.

Erfindungsgemäß können dann vorteilhafterweise in dem Zeitbereich bzw. dem Messsignal der Signalamplitude Sa (rt) als Funktion der Laufzeit relevante Fenster und als Signalbereiche ausgewählt werden, die dann durch inverse Fourier-Transformation zurücktransformiert werden, um das Signalverhalten als Funktion der Zwischenfrequenz zu erhalten. Diese Fourier transformierten Signalbereiche zeigen somit an, welche Frequenzen in diesem Signalbereich des Fensters bzw. in diesem Zeitintervall wie stark absorbiert oder durch Interferenzen beeinflusst werden.

So kann erfindungsgemäß z.B. eine Auswertung gefensterter Signalbereiche der Signalamplitude als Funktion der Laufzeit (t) oder Frequenz erfolgen, wobei in den Signalbereichen eine inverse Fouriertransformation, insbesondere eine fast fourier transformation (FFT) durchgeführt und eine transformierte Signalamplitude als Funktion der Rampenzeit Frequenz oder Zwischenfrequenz gebildet wird. Dies stellt eine mathematisch grundsätzlich einfache Ermittlung dar, die signifikante Auswertungen ermöglicht. Hierbei können in einer invers transformierten Signalamplitude und/oder einem Verlauf der Signalamplitude Signalstrukturen ermittelt werden, insbesondere Absorptionen als Verringerungen der transformierten Signalamplitude über Frequenzbereiche, und die Signalstrukturen bewertet werden.

Somit können erfindungsgemäß Signalstrukturen zur Bewertung herangezogen werden, die in einem Messsignal einer nicht aufwendigen Messung, grundsätzlich vorhanden sind und mit relativ geringem Aufwand relevante Aussagen zur Strukturanalyse ermöglichen,

Ein besonderer Vorteil der Erfindung liegt darin, dass derartige Auswertungen zusätzlich zu einer Radar-Messung durchgeführt werden können, die ohnehin z. B. zur Schichtdickenermittlung durchgeführt wird. Weiterhin werden durch diese Daten Steuerungen oder Regelungen der Extrusionsstrecke ermöglicht. Hierbei kann sowohl die Materialzufuhr erfasst werden, als auch das nachfolgend ausgeführte Extrusionsprodukt, mit im Wesentlichen gleichen Radar-Messvorrichtungen.

Gemäß einer vorteilhaften Ausbildung ist zusätzlich oder alternativ zu einer reinen Laufzeitmessung unter Ermittlung von Teilreflexionen auch eine Messung möglich, bei der die optische Achse des Radar-Transceivers relativ zu der Transportrichtung schräg verläuft, d. h. unter einem nicht-senkrechten Winkel. Bei einer derartigen schrägen Messung ist zum einen der Durchdringungspfad der Strahlung im Messobjekt entsprechend vergrößert; weiterhin sind insbesondere Doppler-Messungen möglich, bei denen somit die Geschwindigkeitskomponente der jeweiligen Einschlüsse in Richtung der optischen Achse erfasst werden kann, so dass die Transportgeschwindigkeit ermittelt werden kann. Hierbei ist zum einen eine direkte Bewertung der Transportgeschwindigkeit möglich; weiterhin kann wiederum eine statistische Auswertung des Doppler-Messsignals erfolgen, um die Eigenschaften des Messobjekts, insbesondere auch eines Materialstroms, besser bewerten zu können.

Als Radarstrahlung kann eine direkte Laufzeitmessung, und insbesondere eine Frequenzmodulation, z. B. ein FMCW (frequency modulated continuous wave)-Radar eingesetzt werden, weiterhin auch gepulste Radarstrahlung, die eine hohe Bandbreite aufweist.

Die Radarstrahlung kann entsprechend auch als THz-Strahlung bezeichnet werden und liegt insbesondere im Frequenzbereich von 10 GHz bis 50 THz, z. B. 30 GHz bis 1 THz oder 5 THz, vor.

Gemäß einer weiteren vorteilhaften Ausführungsform erfolgen Messungen mit unterschiedlichen Frequenz-Zusammensetzungen und/oder Frequenzbereichen. Hierbei können z. B. Messungen mit unterschiedlichen Zentralfrequenzen durchgeführt werden, z. B. mit einem Durchscannen der Zentralfrequenz innerhalb von Zeiträumen, und/oder Messung mit unterschiedlichen Bandbreiten.

Zusätzlich zu der Bewertung der einzelnen Messsignale auf statistische Eigenschaften hin kann weiterhin auch die zeitliche Änderung bzw. das zeitliche Verhalten des Messsignals bewertet werden. Somit können aufeinander folgende Messsignale als zeitlicher Verlauf ausgewertet werden, insbesondere, um statistische Auswertungen des mittleren Detektionsbereichs und/oder des Totalreflexions-Peaks zu erhalten. Auch bei dieser zeitlichen Auswertung kann somit eine statistische Auswertung durchgeführt werden auf Standardabweichung, Varianz, Streuung, zeitlicher Trend, zeitliche Drift und/oder Varianz.

Erfindungsgemäß können als Strukturgrößen insbesondere ein oder mehrere der folgenden Merkmale ermittelt werden:
ein Anteil von Einschlüssen, d.h. insbesondere Gasblasen oder Partikeln, in dem Messobjekt,
von Fehler des Messobjektes, z.B. als Erkennung der Fehler,
eine Größe der Einschlüsse,
eine Homogenität der Verteilung der Einschlüsse,
ein Schäumungsgrad,
eine Ausrichtung und/oder ein Anteil einer Faserstruktur im Material, wobei auch die Ausrichtung relevant ist für die Eigenschaften und die Ausrichtung relativ zur Strahlung detektiert werden kann.

Die Erfindung wird im Folgenden anhand der beiliegenden Zeichnungen an einigen Ausführungsformen näher erläutert. Es zeigen:
- Fig. 1: eine Radar-Messvorrichtung bei Vermessung eines Materialstroms;
- Fig. 2: eine Radar-Messvorrichtung bei Vermessen eines Schaumrohrs;
- Fig. 3: ein Signaldiagramm der Messungen nach Fig. 1 und 2;
- Fig. 4: eine Radar-Messvorrichtung zur Doppler-Messung eines Materialstroms mitsamt Signaldiagramm, und
- Fig. 5: Bewertungen von Signalbereichen bzw. Fenstern des Signaldiagramms der Fig. 3 im Frequenzraum;
- Fig. 6: eine Leermessung mit inverser Fouriertransformation des relevanten Signalbereichs des Totalreflexionspeaks;
- Fig. 7: die der Fig. 6 nachfolgende Messung des Materialstroms und die inversen Fouriertransformationen der Fenster bzw. Signalbereiche in den Frequenzraum;
- Fig. 8: eine Extrusionsstrecke mit Radar-Messeinrichtungen zum Vermessen eines Materialstroms der Zuführung sowie eines Extrusionsproduktes.

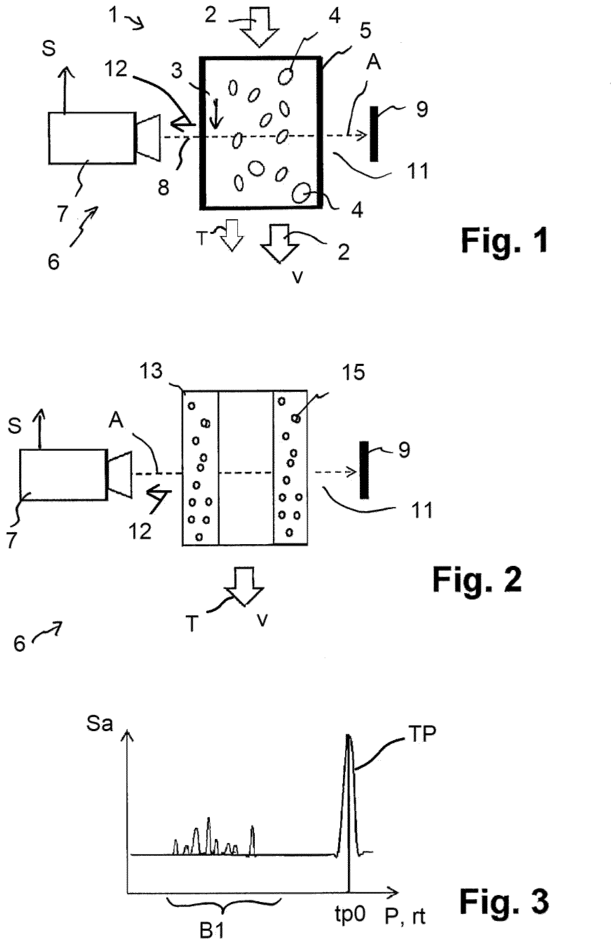

In Figur 1 ist eine Förderstrecke 1 mit einem Materialstrom 3 gezeigt, wobei der Materialstrom 3 durch einen Luftstrom 2 mit Partikeln 4 in einer Führung 5, z. B. einem Rohr oder einem Schlauch, ausgebildet ist. Grundsätzlich kann ein Materialstrom 3 auch z. B. bei einer Materialaufnahme eines Extrudertrichters ohne eine direkte Führung ausgebildet sein. Eine Radar-Messvorrichtung 6 dient in Figur 1 zur Vermessung des Materialstroms 3 und weist einen Radar-Transceiver 7 mit einer optischen Achse A und einen senkrecht zur optischen Achse A und hinter dem Materialstrom 3 angeordneten Reflektor 9 auf. Der Radar-Transceiver 7 gibt Radarstrahlung 8 in einem Frequenzbereich von z. B. 10 GHz bis 50 THz aus, insbesondere von 10 GHz bis 3 THz. Die Radarstrahlung 8 kann z. B. als FMCW (frequency modulated continuous wave)-Radar oder auch als gepulste Strahlung ausgegeben werden. Somit gibt der Radar-Transceiver 7 die Radarstrahlung 8 entlang der optischen Achse A aus, die durch den Materialstrom 3 verläuft, vom Reflektor 9 zurück reflektiert und wieder vom Radar-Transceiver 7 detektiert wird, der daraufhin ein Messsignal S ausgibt, das je nach Messprinzip, z. B. frequenzmoduliert oder gepulst ausgebildet sein kann. Die Radarstrahlung 8 wird somit als Reflexionsstrahlen 12 reflektiert und detektiert, wobei die Reflexionsstrahlen 12 zum einen durch Totalreflexion am Reflektor 9; weiterhin durch Teilreflexion an den Partikeln 4 des Materialstroms 3 erfolgt, die im Bereich der optischen Achse von der Radarstrahlung 8 getroffen werden.

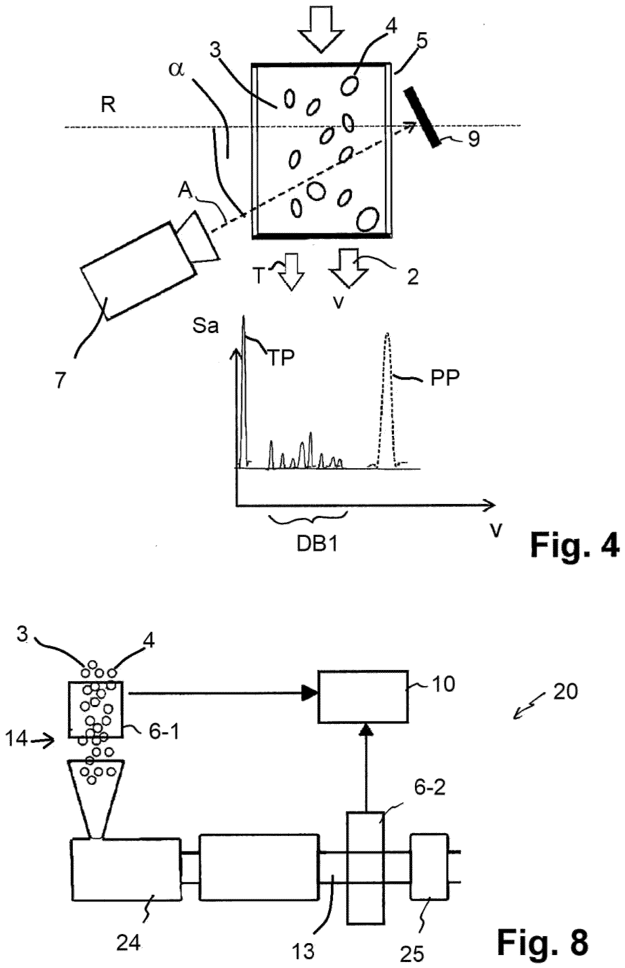

Die Partikel 4 werden über eine Materialzuführung 14 zu einem in Figur 8 gezeigten Extruder 24 zugeführt und können insbesondere aus einem Kunststoff-Material ausgebildet sein, weiterhin auch aus einem anderen zur Zuführung zu einem Extruder 24 geeigneten Material ausgebildet sein, hier z. B. einem aufschmelzbaren Material wie Gummi; weiterhin können die Partikel 4 jedoch auch aus einem Zuschlagsmaterial oder Additiv gebildet sein, das z.B. über eine eigene Materialzuführung 14 zugeführt wird. Entsprechend können die Partikel 4 auch z. B. aus Fasern, z. B. Glasfaser, oder auch als Additiv wie Calciumcarbonat, weiterhin Holzpartikel ausgebildet sein. Diese Materialien weisen einen Brechungsindex n4 auf, der deutlich größer als der Brechungsindex n=1 von Luft liegt, so dass beim Eindringen der Radarstrahlung 8 in die Partikel 4 jeweils Teilreflexionen an den Grenzflächen auftreten, die je nach Lage und Orientierung der Grenzflächen in unterschiedliche Richtungen teilreflektiert werden. Somit wird ein gewisser Anteil der teilreflektierten Strahlung entlang der optischen Achse 8 zu dem Radar-Transceiver 7 zurück reflektiert. Die Materialzuführung 14 kann unterschiedlich ausgebildet sein, z.B. als Fallstrecke, als eine Luftstromführung, eine Rüttelplatte, eine Rutsche, ein Trichter oder eine Förderschnecke.

Figur 2 zeigt die Radar-Messvorrichtung 6 bei Vermessung eines Extrusionsproduktes 13, das hier z. B. als Schaumrohr 13 ausgebildet ist, mit einem Kunststoff-Material als Matrix und Gasblasen 15 als Einschlüsse in der Kunststoff-Matrix. Das Rohr 13 kann jedoch auch z. B. die Gasblasen 15 lediglich als Lunker bzw. ungewollte Einschlüsse aufweisen. Hierbei wird das Rohr 13 in einer Transportrichtung T relativ zu der Radar-Messvorrichtung 6, d. h. dem Radar-Transceiver 7 und dem Reflektor 9, verstellt, mit z. B. einer Relativgeschwindigkeit v. Auch hier gibt der Radar-Transceiver 7 wiederum das Messsignal S aus.

Somit sind die Anordnungen von Figur 1 und 2 dahingehend gleichartig, dass ein Messobjekt fortlaufend entlang der Transportrichtung T durch die Radar-Messvorrichtung 7 geführt wird und die Radarstrahlen 8 somit jeweils einen Querschnitt des Messobjektes erfassen, wobei in Figur 1 das Messobjekt durch den Materialstrom 3 und in Figur 2 durch das Rohr 13 ausgebildet ist. In Figur 2 wird die Radarstrahlung 8 an den Gasblasen 15, d. h. an den Grenzflächen der Gasblasen 15, zu der Kunststoff-Matrix, teilreflektiert, so dass wiederum ein Teil der teilreflektierten Strahlung bzw. allgemein der Reflexionsstrahlen 12, entlang der optischen Achse A zu dem Radar-Transceiver 7 zurück reflektiert wird.

Die Messanordnungen aus Figur 1 und 2 ergeben jeweils ein Signaldiagramm S, das in Figur 3 beispielhaft dargestellt ist. Hierbei ist eine Signalamplitude Sa in Abhängigkeit einer Kanal-Nummer P aufgetragen. Die Kanal-Nummer P entspricht somit der Laufzeit rt vom THz-Transceiver 7 zu der jeweils reflektierenden Grenzfläche und zurück zu dem Radar-Transceiver 7, wobei die Grenzflächen in Figur 1 durch eine Partikelgrenzfläche eines Partikels 4 oder dem Reflektor 9 gebildet sind, und in Figur 2 durch eine Grenzfläche einer Gasblase 15 oder durch den Reflektor 9.

In der Signalamplitude Sa der Figur 3 treten somit in einem mittleren Signalbereich B1 Reflexions-Peaks durch Teilreflexionen an den jeweiligen Einschlüssen auf, d. h. in Figur 1 durch die Grenzflächen der Partikel 4 und in Figur 2 durch die Grenzflächen der Gasblasen 15, die nachfolgend als Einschlüsse 4, 15 bezeichnet werden. Weiterhin tritt zu einem Zeitpunkt tp0 bzw. bei einer Kanal-Nummer P-tp ein Totalreflexions-Peak TP auf, der entsprechend deutlich größer ist als die vorher erfolgten Teilreflexionen.

Bei der Bewertung der Signalamplitude Sa kann gegebenenfalls zunächst eine Kalibriermessung bzw. Leermessung erfolgen, d. h. z. B. in Figur 1 mit der Führung 5 ohne Materialstrom 3 bzw. bei leerer Führung 5, und in Figur 2 ohne das Extrusionsprodukt 13, so dass nachfolgend ein Vergleich der in Figur 3 gezeigten Messungen mit der Kalibriermessung erfolgen kann, um eine Gesamt-Verzögerung des Zeitpunktes tp0 des Totalreflexions-Peaks TP durch das in der optischen Achse A jeweils vorliegende Material. Dieses in der optischen Achse A jeweils vorliegende Material wird in Figur 1 durch das gesamte Material der einzelnen Partikel 4 auf der optischen Achse A, und in Figur 2 durch das Material der Kunststoff-Matrix auf der optischen Achse A, gebildet. Weiterhin können ergänzend auch größere Grenzflächen, z. B. in Figur 2 äußere Grenzflächen des Extrusionsproduktes 13, bewertet werden, wie es als solches bei der Vermessung von Wanddicken bekannt. Erfindungsgemäß wird insbesondere eine Bewertung der Einschlüsse 4, 15 vorgenommen, die zum einen durch den mittleren Signalbereich B1 erfolgen kann, und zum anderen durch Auswertung des Totalreflexions-Peaks TP.

In dem mittleren Signalbereich B1 tritt im Allgemeinen eine Vielzahl kleiner Teilreflexions-Peaks auf, die sich in Figur 1 aufgrund des fluktuierenden Materialstroms 3 jeweils ändern und zunächst wie ein Rauschen aussehen kann; in Figur 2 tritt entsprechend bei der Relativverstellung des Extrusionsproduktes 13 gegenüber dem Radar-Transceiver 7 eine zeitliche Änderung auf. Hierbei können sowohl die einzelnen mittleren Diagrammbereiche B1 zu jedem Zeitpunkt ausgewertet werden, als auch das zeitliche Verhalten der mittleren Signalbereiche B1 über die Zeit, d. h. über mehrere Messungen hinweg.

Bei der statischen Auswertung der einzelnen mittleren Diagrammbereiche B1 bei jeder Messung kann eine statistische Auswertung erfolgen, z. B. unter Ansetzen einer Standardabweichung. Hierbei kann z. B. eine Referenzmessung, oder auch ein statistisches Modell, herangezogen werden, um in Figur 1 und 2 jeweils den Anteil an Partikeln 4 im Materialstrom bzw. den Anteil der Gasblasen 15 im Extrusionsprodukt 13 abzuschätzen. Somit können hier z. B. relative Anteile der Einschlüsse 4, 15 in dem jeweiligen Messobjekt ermittelt werden.

Weiterhin kann eine derartige Abschätzung auch bereits durch den Vergleich mit der vorherigen Leermessung bzw. Kalibriermessung erfolgen, so dass eine Gesamtverzögerung bereits bei der Auswertung des mittleren Signalbereichs B1 vorliegt und somit auch für eine Kalibrierung des mittleren Signalbereichs B1 herangezogen werden kann.

Weiterhin kann aus der statistischen Auswertung auf eine Verteilung und Größe der jeweiligen Einschlüsse 4, 15 geschlossen werden, so dass z. B. in Figur 2 die Ausbildung weniger größerer Luftblasen 15 unterschieden werden kann von der Ausbildung einer größeren Anzahl kleinerer Luftblasen 15, und in Figur 1 z. B. ein Verklumpen von Partikeln 4, oder auch eine ungleichmäßige Zufuhr von Partikeln 4 in dem Materialstrom 3 detektiert werden kann.

Somit kann z.B. der quantitative Anteil der Einschlüsse, d. h. in Figur 2 der Materialstrom in z. B. kg/Sekunde, und in Figur 2 der Anteil der Gasblasen 15 am Extrusionsprodukt 13, ermittelt werden.

Die Ausführungsform der Figur 4 entspricht im Wesentlichen der Figur 1, wobei die optische Achse A nicht-senkrecht zur Führung 5 bzw. zur Transportrichtung T verläuft. Bei diesem schrägen Einfall wird somit zwischen der optischen Achse A und der Transportrichtung T bzw. einer Normalen (Radius) R ein Neigungswinkel/Schrägstellwinkel α ausgebildet. Hierdurch kann zum einen die Wegstrecke der Radarstrahlung 8 in der Führung 5 und somit durch den Materialstrom 3 vergrößert werden, entsprechend dem Kehrwert des Cosinus des Winkels zwischen R und A, so dass wiederum eine Signalamplitude gemäß Figur 3 durch Laufzeitmessungen, insbesondere auch als Frequenzmodulation, ausgewertet werden kann. Insbesondere kann gemäß Figur 4 auch eine Doppler-Messung erfolgen, durch die die Geschwindigkeitskomponente in Transportrichtung T detektiert werden kann, so dass hieraus auf die Transportgeschwindigkeit v der Partikel 4 geschlossen werden kann. Diese Messung ist somit genauer als z. B. die Messung der Geschwindigkeit des Luftstroms 3. Entsprechend ist in Figur 4 die Signalamplitude Sa in Abhängigkeit der durch Doppler-Messung ermittelten Geschwindigkeit v aufgetragen. Hier ergibt sich für den Totalreflexions-Peak TP ein Wert von v = 0, da der Reflektor 9 gegenüber dem Radar-Transceiver 7 stillsteht, mit nachfolgendem Signalbereich DB1 durch Messungen der Partikel 4 als Teilreflexion. Mit PP ist ein Peak eines metallischen Teilchens bezeichnet, das in dem Luftstrom 3 schneller fällt als die Partikel 4 und somit eindeutig detektiert werden kann

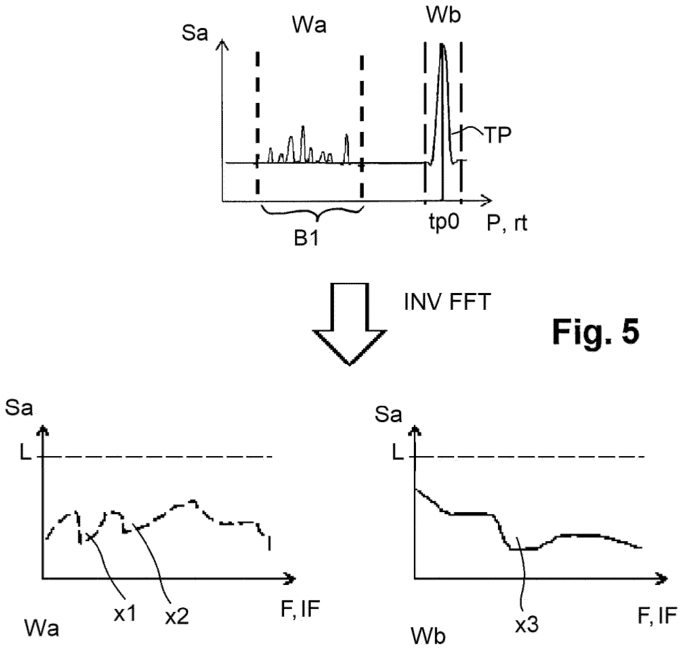

Weiterhin kann gemäß Fig. 5 bis 7 eine Bewertung des frequenzspezifischen Verhaltens erfolgen, insbesondere einer frequenzspezifischen Absorption oder Dämpfung oder Interferenz des Materialstroms. So kann das Material bzw. Partikel 4 in dem Materialstrom mit bestimmten Größen oder Dimensionen frequenzspezifisch absorbieren. Es zeigt sich, dass z.B. Luftblasen in Abhängigkeit Ihrer Größe sehr frequenzspezifisch absorbieren können, weiterhin auch Partikel 4.

Fig. 5 zeigt dies in vereinfachter Darstellung. Fig. 5 zeigt ein Messsignal Sa (rt) entsprechend Fig. 3, das somit die Signalamplitude Sa, je nach Messprinzip, als Funktion der Laufzeit / Frequenz rt bzw. der Peakposition P angibt. In Fig. 5 werden geeignete Signalbereiche der Laufzeit bzw. Fenster Wa, Wb ermittelt. Gemäß Fig. 5 wird ein erstes Fenster Wa herangezogen, das den Laufzeitbereich der Teilreflexionen des Materialstroms erfasst, und ein zweites Fenster Wb, das den Totalreflexionspeak erfasst.

Die Signaldiagramme Sa (rt) in den Fenstern Wa, Wb werden dann im Fall der FMCW-Radar-Technologie invers FFT in den Zeit / Schwingungsbereich zurücktransformiert, so dass die gezeigten beiden Signaldiagramme des Fensters Wa als absolute Signalamplitude Sa (IF) in Abhängigkeit der Sweepzeit (mit einer Startfrequenz F0 und einer Stopfrequenz FStop) vorliegen, auf die das von dem Schwingkreis bzw. der Antenne empfangene Signal heruntergemischt und nachfolgend demoduliert wird. Als L ist auf der Ordinate bzw. der Achse der Signalamplitude beispielsweise ein normierter Wert einer Leermessung aufgetragen.

Es zeigen sich in den beiden Fenstern Wa und Wb charakteristische Strukturen des Intensitätsverlaufs. So sind in Fig. 5 mitx1, x2, x3 Signalstrukturen bzw. Signalmerkmale gezeigt, in denen eine stärkere Absorption bzw. Dämpfung auftritt als in anderen Bereichen. Aus der Position, d.h. dem Wert der Frequenz oder Zwischenfrequenz und der Breite auf der Frequenzachse F, IF, sowie der Höhe der Absorption als Verringerung der Signalamplitude Sa können somit Aussagen getroffen werden, z.B. über die Anzahl von Partikeln 4 bzw. Luftblasen mit relevanten Durchmessern, wobei auch eine Materialbestimmung der Partikel möglich wird.

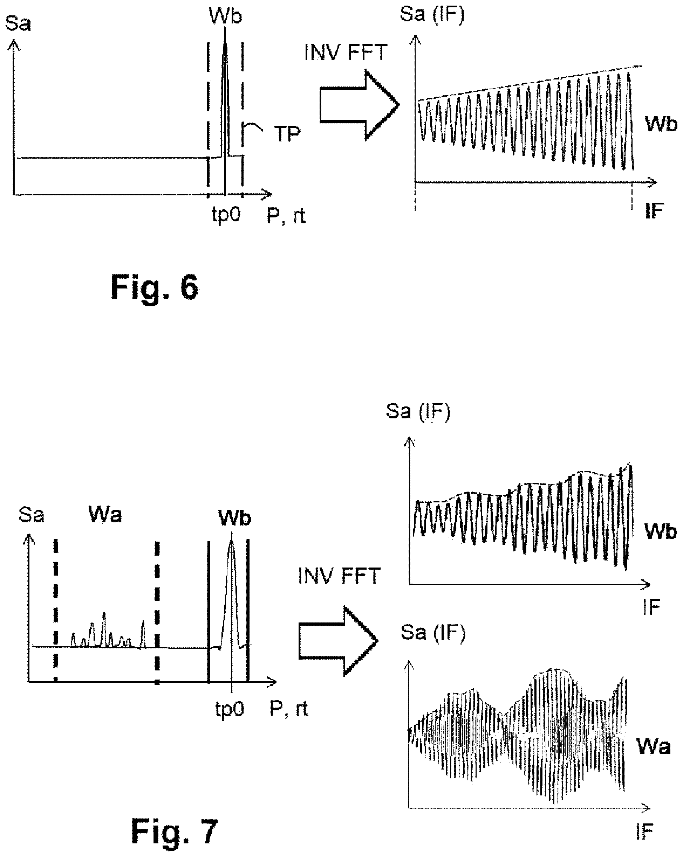

Fig. 6 und 7 zeigt eine derartige Ermittlung detaillierter. In Fig. 6 ist eine Leermessung, d.h. eine Messung der Signalamplitude Sa ohne Materialstrom gezeigt, bei der somit lediglich der Totalreflexionspeak TP zum Zeitpunkt tp0 einen Beitrag liefert. Der hier relevante Signalbereich Wb um den Totalreflexionspeak Tp herum wird nachfolgend invers Fourier transformiert und dient als Referenz- Leermessung für die nachfolgenden Materialmessung der Fig. 7. In Fig. 7 sind der mittlere Signalbereich Wa und der Signalbereich Wb um den Totalreflexionspeak Tp herum relevant. In Fig. 6 und 7 ist in den rechten Signaldiagrammen das Absolutsignal gestrichelt als Hüllkurve eingezeichnet, d.h. es stellt eine Begrenzung der Signalkurve dar. Hier zeigen sich die charakteristischen Signalstrukturen, entsprechend Fig. 5, in der gestrichelt eingezeichneten Hüllkurve.

Figur 8 zeigt eine Extrusionsstrecke 20 mit dem Materialstrom 3 aus Partikeln 4, der durch eine Radar-Messvorrichtung 6-1 vermessen wird, dem nachfolgenden Extruder 24, der die Partikel 4 aufnimmt, schmilzt, fördert und durch eine Extrusionsdüse formt, einem nachfolgenden Abzieher 25, der das Extrusionsprodukt 13 aus dem Extruder 24 zieht, wobei das Extrusionsprodukt 13, z. B. ein Rohr oder Schaumrohr, durch die zweite Radar- Messvorrichtung 6-2 vermessen wird. Somit kann hier gegebenenfalls auch eine gemeinsame Auswertung durch eine zentrale Steuer- und Auswerteeinrichtung 10 erfolgen.

### Bezugszeichenliste

- 1: Förderstrecke
- 2: Luftstrom
- 3: Materialstrom
- 4: Partikel
- 5: Führung, Rohr
- 6: Radar-Messvorrichtung
- 6-1: Radar-Messvorrichtung bei der Materialzuführung 14
- 6-2: Radar-Messvorrichtung zur Vermessung des Extrusionsproduktes
- 7: Radar-Transceiver
- 8: Radarstrahlen
- 9: Reflektor
- 10: Steuer- und Auswerteeinrichtung
- 11: Messraum
- 12: Reflexionsstrahlen
- 13: Extrusionsprodukt, z. B. Schaumrohr
- 14: Materialzuführung
- 15: Gasblasen im Extrusionsprodukt
- 20: Extrusionsstrecke
- 24: Extruder
- 25: Abzieher
- A: optische Achse
- S: Messsignal
- Sa: Signalamplitude
- v: Geschwindigkeit, Relativgeschwindigkeit
- T: Transportrichtung
- P: Kanal-Nummer
- rt: Laufzeit
- TP: Totalreflexions-Peak
- B1: mittlerer Signalbereich
- DB1: mittlerer Signalbereich
- tp0: Zeitpunkt des Totalreflexions-Peaks TP
- R: Normale (Radius)
- α: Neigungswinkel/Schrägstellwinkel
- IF: Zwischenfrequenz
- x1, x2, x3: Signalstrukturen

## Patentansprüche

1. Verfahren zur Strukturanalyse eines Messobjektes (3, 13) in einer Extrusionsstrecke (20), mit mindestens folgenden Schritten:
Bereitstellen einer Radar-Messvorrichtung (6), die einen Radar-Transceiver (7) mit einer optischen Achse (A) und einen auf der optischen Achse (A) angeordneten Reflektor (9) aufweist, wobei zwischen dem Radar-Transceiver (7) und dem Reflektor (9) ein Messraum (11) ausgebildet ist,
Führen eines Messobjektes (3, 13) durch den Messraum (11) in einer Transportrichtung (T),
Radarmessung, bei der von dem Radar-Transceiver (7) Radarstrahlen (8) entlang der optischen Achse (A) durch den Messraum (11) und das Messobjekt (3, 13) zu dem Reflektor (9) ausgegeben und
reflektierte Reflexionsstrahlen (12) von dem Radar-Transceiver (7) detektiert werden,
Auswertung eines Messsignals (S) des Radar-Transceivers (7) und Ermittlung von Strukturgrößen des Messobjektes (3, 13).

2. Verfahren nach Anspruch 1, **dadurch gekennzeichnet, dass** als Strukturgrößen ein oder mehrere der folgenden Merkmale ermittelt werden:
ein Anteil von Einschlüssen (4, 15) in dem Messobjekt (3, 13),
Fehler des Messobjektes (3, 13),
eine Größe der Einschlüsse (4, 15),
eine Homogenität der Verteilung der Einschlüsse (4, 15)
ein Schäumungsgrad;
eine Ausrichtung und/oder ein Anteil einer Faserstruktur im Material

3. Verfahren nach Anspruch 1 oder 2, **dadurch gekennzeichnet, dass** bei der Auswertung ein mittlerer Signalbereich (B1, DB1) einer Signalamplitude (Sa) des Messsignals (S1) als Funktion der Laufzeit bewertet wird, wobei der mittlere Signalbereich (B1, DB1) zwischen einer unteren Laufzeit und oberen Laufzeit festgelegt ist und wobei der mittlere Signalbereich (B1, DB1) mehrere Teilreflexions-Peaks aufweist.

4. Verfahren nach einem der vorherigen Ansprüche, **dadurch gekennzeichnet, dass** bei der Auswertung eine Form eines Bereiches des Totalreflexions-Peaks (TP) bewertet wird, der den Totalreflexionspeak und einen nachgelagerten und/oder vorgelagerten Flankenbereich des Totalreflexionspeaks umfasst.

5. Verfahren nach einem der vorherigen Ansprüche, **dadurch gekennzeichnet, dass** bei der Auswertung eine statistische Bewertung der zeitlichen Änderung des mittleren Signalbereichs (B1) und/oder des Bereiches des Totalreflexions-Peaks (TP) über mehrere aufeinanderfolgende Messungen ausgeführt wird.

6. Verfahren nach einem der vorherigen Ansprüche, **dadurch gekennzeichnet, dass**
- bei der Auswertung gefensterte Signalbereiche (Wa, Wb) der Signalamplitude (S) als Funktion der Laufzeit (t) oder Frequenz gewählt werden,
- in den Signalbereichen (Wa, Wb) eine inverse Fouriertransformation, insbesondere eine fast fourier transformation (FFT) durchgeführt und eine transformierte Signalamplitude (S (IF)) als Funktion der Rampenzeit Frequenz (F) oder Zwischenfrequenz (IF) gebildet wird,
- wobei in einer invers transformierten Signalamplitude (S (IF)) und/oder einem Verlauf der Signalamplitude (S (IF)) Signalstrukturen (x1, x2, x3) ermittelt werden, insbesondere Absorptionen als Verringerungen der transformierten Signalamplitude (S) über Frequenzbereiche, und
- die Signalstrukturen (x1, x2, x3) bewertet werden.

7. Verfahren nach Anspruch 6, **dadurch gekennzeichnet, dass** bei der Bewertung der Signalstrukturen herangezogen wird:
eine Position als Wert der Frequenz oder Zwischenfrequenz,
eine Breite auf der Frequenzachse (F, IF),
eine Höhe der Absorption als Verringerung der Signalamplitude (SF).

8. Verfahren nach dem Anspruch 6 oder 7, **dadurch gekennzeichnet, dass** aus der Bewertung der Signalstrukturen ermittelt wird eine oder mehrere der folgenden Eigenschaften:
Anzahl von Partikeln (4) oder Gasblasen,
Größe der Partikel (4) oder Gasblasen,
Material der Partikel (4).

9. Verfahren nach einem der vorherigen Ansprüche, **dadurch gekennzeichnet, dass** eine Ausrichtung der optischen Achse (A) zu der Transportrichtung (T) ausgebildet ist als:
senkrechter Winkel, unter direkter Laufzeitmessung, frequenzmodulierter Radarmessung und/oder Laufzeitmessung gepulster Radarstrahlung, oder
schräger Winkel unter Doppler-Messung zur Ermittlung einer Geschwindigkeitskomponente in Transportrichtung (T) und Auswertung eines Geschwindigkeitsverhaltens.

10. Verfahren nach einem der vorherigen Ansprüche, **dadurch gekennzeichnet, dass** als Messobjekt (3, 13) vermessen wird:
ein Materialstrom (3) aus Partikeln (4), die in einem Gas oder
Gasstrom geführt werden oder fallen, oder
ein Extrusionsprodukt (13), das eine Materialmatrix, z. B. aus Kunststoff oder Gummi, und Einschlüsse, z. B. Lufteinschlüsse (15) oder Fasern aufweist.

11. Verfahren nach einem der vorherigen Ansprüche, **dadurch gekennzeichnet, dass** bei der Auswertung als statistische Daten eine oder mehrere der folgenden Größen ermittelt werden:
Streuung, Standardabweichung, zeitlicher Trend, zeitliche Drift, Varianz Standardabweichung.

12. Verfahren nach einem der vorherigen Ansprüche, **dadurch gekennzeichnet, dass** Messungen durchgeführt werden
- mit unterschiedlicher Bandbreite, und/oder
- mit unterschiedlicher Zentralfrequenz, und/oder
- mit einem zeitlichen Durchstimmen eines Frequenzbereichs
- mit Radarstrang (8) in einem Frequenzbereich von 10 GHz bis 50 THz, insbesondere 30 GHz bis 10 THz.

13. Verfahren nach einem der vorherigen Ansprüche, **dadurch gekennzeichnet, dass** zusätzlich zu der aktuellen Vermessung des Messobjektes (3, 13) durchgeführt wird:
vor Einführen des Messobjektes (3, 13) eine Leermessung bei leerem Messraum (11), zur nachfolgenden Kalibrierung, und/oder eine Dunkelsignalmessung.

14. Radar-Messvorrichtung (6), die aufweist:
einen Radar-Transceiver (7), der ausgebildet ist, Radarstrahlen (8) entlang einer optischen Achse (A) auszugeben,
einen Reflektor (9), der auf der optischen Achse (A) und senkrecht zur optischen Achse (A) angeordnet ist, wobei ein Messraum (11) zwischen dem Radar-Transceiver (7) und dem Reflektor (9) ausgebildet ist,
eine Steuer- und Auswerteeinrichtung (10), die ausgebildet ist, den Radar-Transceiver (7) anzusteuern und Messsignale (S1) des Radar-Transceivers (7) aufzunehmen,
wobei die Steuer- und Auswerteeinrichtung ausgebildet ist, ein Verfahren nach einem der vorherigen Ansprüche oder die Schritte der Radarmessung und der Auswertung des Messsignals des Verfahrens nach einem der vorherigen Ansprüche durchzuführen.

15. Extrusionsstrecke (20), die einen Extruder (24) und eine Materialzuführung (14) für Partikel (4) eines Schüttgutes aufweist und ausgebildet ist, ein Extrusionsprodukt (13) auszugeben,
wobei in der Extrusionsstrecke (20) mindestens eine Radar- Messvorrichtung (6) nach Anspruch 15 vorgesehen ist, wobei die Radar-Messvorrichtung (6) vorgesehen ist:
- an oder bei der Materialzuführung (14) für das Schüttgut aus Partikeln (4), und/oder
- hinter dem Extruder (24), z. B. zwischen Extruder (24) und einem nachfolgenden Abzieher (25) zum Abziehen des Extrusionsproduktes (13).
